# EUROPÄISCHE PATENTSCHRIFT

(11) **EP 0 805 606 B1**
(45) Veröffentlichungstag und Bekanntmachung des Hinweises auf die Patenterteilung: **25.01.2006**
(21) Anmeldenummer: 97400968.0
(22) Anmeldetag: 29.04.1997
(51) Int. Cl.: H04Q 3/00

(54) **Verfahren zum Betreiben eines Kommunikationsnetzes und Netzübergangseinrichtung**
Method for operating a communication network and network gateway device
Procédé pour faire fonctionner un réseau de communication et dispositif d'adaptation de réseau

(30) Priorität: 30.04.1996 DE 19617348
(43) Veröffentlichungstag der Anmeldung: 05.11.1997
(73) Patentinhaber: ALCATEL, 75008 Paris (FR)
(72) Erfinder: Stahl, Uwe, 71229 Leonberg (DE); Lautenschlager, Wolfgang, 71287 Weissach-Flacht (DE)
(74) Vertreter: Schätzle, Albin

(56) Entgegenhaltungen:
- US-A- 5 282 244
- KETTLER H W ET AL: "EVOLUTION OF THE INTELLIGENT NETWORK TO SUPPORT GLOBAL SERVICES" PROCEEDINGS OF THE INTERNATIONAL SWITCHING SYMPOSIUM, YOKAHAMA, JAPAN, Bd. 2, 25. - 30. Oktober 1992, Seiten 53-57, XP000429942
- ZAHARYCHUK J ET AL: "GATEWAY SIGNAL TRANSFER POINTS: DESIGN, SERVICES AND BENEFITS" PROCEEDINGS OF THE IEEE INTERNATIONAL CONFERENCE ON COMMUNICATIONS (SUPERCOMM/ICC '90), ATLANTA, GA, Bd. 1, 15. - 19. April 1990, Seiten 233-240, XP000147408

## Beschreibung

Die Erfindung betrifft ein Verfahren zum Betreiben eines Kommunikationsnetzes eines Netzbetreibers, das mit einem oder mit mehreren weiteren Kommunikationsnetzen eines oder mehrerer anderer Netzbetreiber jeweils über einen oder über mehrere Netzübergänge verkoppelt ist, nach dem Oberbegriff von Anspruch 1, sowie ein Kommunikationsnetz nach dem Oberbegriff von Anspruch 11 und eine Netzübergangseinrichtung nach dem Oberbegriff von Anspruch 12.

Ein Schlüsselelement für das Betreiben eines Kommunikationsnetzes stellt die Bereitstellung von Netzübergängen zu Kommunikationsnetzen anderer Netzbetreiber dar. Solche Netzübergänge werden heutzutage vor allem von Betreibern nationaler Fernsprechnetze für die Weiterleitung von Rufen in andere nationale Fernsprechnetze bereitgestellt. Es ist zu erwarten, daß solche Netzübergänge auch verstärkt zwischen Fernsprechnetzen privater Netzbetreiber sowie zwischen Fernsprechnetzen öffentlicher und privater Netzbetreiber anzutreffen sind.

Die Erfindung geht nun von der heute üblichen Bereitstellung eines Netzübergangs zwischen zwei nationalen Fernsprechnetzen aus, wie sie beispielsweise in der Zeitschrift "Trends in Telecommunications", 1992, Bd. 8, Nr. 1, auf den Seiten 53-64 beschrieben ist. Entsprechende Netzübergänge sind beispielsweise in der Veröffentlichung "Evolution of the Intelligent Network to Support Global Services" von H.W. Kettler et al. in "Proceedings of the International Switching Symposium", Bd. 2, 25. -30. Oktober 1992, Seiten 53-57, beschrieben.

Die Netzübergänge zwischen zwei nationalen Fernsprechnetzen, die von zwei unterschiedlichen Netzbetreibern betrieben werden, werden jeweils von zwei Netzübergangs-Vermittlungen gebildet, von denen die eine dem einen und die andere dem anderen Fernsprechnetz zugeordnet ist. Die beiden Netzübergangs-Vermittlungsstellen sind über ein Nutzkanol-Bündel sowie über diesem Nutzkanal-Bündel zugeordnete Signalisierungskanäle miteinander verbunden. An den Netzübergangs-Vermittlungsstellen werden jeweils Netzübergangsfunktionen für Verbindungen über das jeweilige Nutzkanalbündel zu einer Netzübergangs-Vermittlungsstälie eines anderen Netzbetreibers parallel zur Vermittlung und zum Aufbau der Verbindung durchgeführt. Solche Netzübergangsfunktionen sind beispielsweise eine Protokoll-Konvertierung für unterschiedliche Signalisierungsverfahren in den beiden Fernsprechnetzen, Funktionen für die Bereitstellung von Diensten des anderen Fernsprechnetzes und Erfassung von Kommunikationsereignissen für die Gebührenabrechnung zwischen den Netzbetreibern. Diese Netzübergangsfunktionen sind integrale Bestandteile des jeweiligen Netzübergangs, die die Kopplung der beiden Fernsprechnetze über den jeweiligen Netzübergang erst ermöglicht.

In der U.S.-Patentschrift Nr. 5,282,244 ist ein alternativer Ansatz beschrieben, der ein virtuelles Signalisierungsnetzwerk umfasst.

Zaharychuk et al. beschreiben in ihrem Papier "Gateway Signal Transfer Points: Design, Services and Benefits" in "Proceedings of the IEEE International Conference on Communications", Bd. 1, 15. -19. April 1990, Seiten 233-240, ein Gateway zur Verbindung zweier Fernsprechnetze.

Ein Problem ist nun, dass durch die zunehmende Anzahl von Netzbetreibern und Telekommunikationsdiensten, die in einem Telekommunikationsnetz bereitzustellen sind, die Komplexität der Netzübergangsvermittlungseinrichtungen immer weiter steigt.

Der Erfindung liegt nun die Aufgabe zugrunde, den technischen Aufwand in einem Kommunikationsnetz zu verringern, das über mehrere Netzübergänge zu einem oder zu mehreren anderen Kommunikationsnetzen verfügt.

Diese Aufgabe wird gelöst durch ein Verfahren zum Betreiben eines Kommunikationsnetzes nach der Lehre von Anspruch 1, durch ein Kommunikationsnetz nach der Lehre von Anspruch 11 und durch eine Netzübergangseinrichtung nach der Lehre von Anspruch 12.

Der Grundgedanke der Erfindung ist, die Netzübergangsfunktionen von der Vermittlung und dem Aufbau einer Verbindung über den Netzübergang in der Netzübergangs-Vermittlungsstelle zu trennen. Nutzkanäle für Verbindungen zu anderen Kommunikationsnetzen werden über die Fläche des Kommunikationsnetzes verteilt ausgehend von Netzübergangs-Vermittlungsstellen bereitgestellt, die Netzübergangsfunktionen für diese Verbindungen werden jedoch von einer diesen Vermittlungsstellen gemeinsamen Netzübergangseinrichtung erbracht. Dadurch ist es möglich, den Austausch von Nutzdaten zwischen den Kommunikationsnetzen gemäß den verkehrsmäßigen Forderungen dezentral über die Fläche der Kommunikationsnetze verteilt durchzuführen und somit eine günstige verkehrsmäßige Belastungssituation der Kommunikationsnetze zu erreichen. Parallel dazu werden die Netzübergangsfunktionen zentralisiert und somit mit geringerem hard- und softwaremäßigem Aufwand erbracht.

Als weiterer Vorteil resultiert aus der zentralisierten Erbringung der Netzübergangsfunktionen, daß hierdurch eine zentralisierte Datenerfassung und Datenverwendung möglich ist. Dadurch werden zahlreiche Probleme der Datensynchronität vermieden.

Sind den den Netzübergängen zugeordneten Nutzkanälen Signalisierungskanäle zugeordnet, so kann die Zentralisierung der Netzübergangsfunktionen auf einfache Weise dadurch realisiert werden, daß die Signalisierungskanäle von den Netzübergangs-Vermittlungsstellen über die zentrale Netzübergangseinrichtung geführt mit den Vermittlungseinrichtungen des oder der Kommunikationsnetze anderer Netzbetreiber verbunden werden.

Besonders vorteilhaft ist es, die Netzübergangsfunktionen für sämtliche Verbindungen zu Kommunikationsnetzen anderer Netzbetreiber zentral durch eine einzige Netzübergangseinrichtung zu erbringen. Hierdurch treten keinerlei Probleme mit Datensynchronität auf und die Netzübergangseinrichtung kann beispielsweise als Basis für einen zentralen Gebührenrechner dienen.

Im folgenden wird die Erfindung anhand eines Ausführungsbeispiels unter Zuhilfenahme beiliegender Zeichnungen beschrieben.
- Fig. 1: zeigt eine symbolische Darstellung einer Kommunikationsumgebung mit einem erfindungsgemäßen Kommunikationsnetz.
- Fig. 2: zeigt eine detaillierte Darstellung eines Ausschnitts aus der Kommunikationsumgebung nach Fig. 1.
- Fig. 3: zeigt ein Blockschaltbild einer erfindungsgemäßen Netzübergangseinrichtung für das erfindungsgemäße Kommunikationsnetz nach Fig. 1.

Im Ausführungsbeispiel wird die Durchführung des erfindungsgemäßen Verfahrens zum Betreiben eines Kommunikationsnetzes anhand eines erfindungsgemäßen Kommunikationsnetzes erläutert, das über eine erfindungsgemäße Netzübergangseinrichtung verfügt.

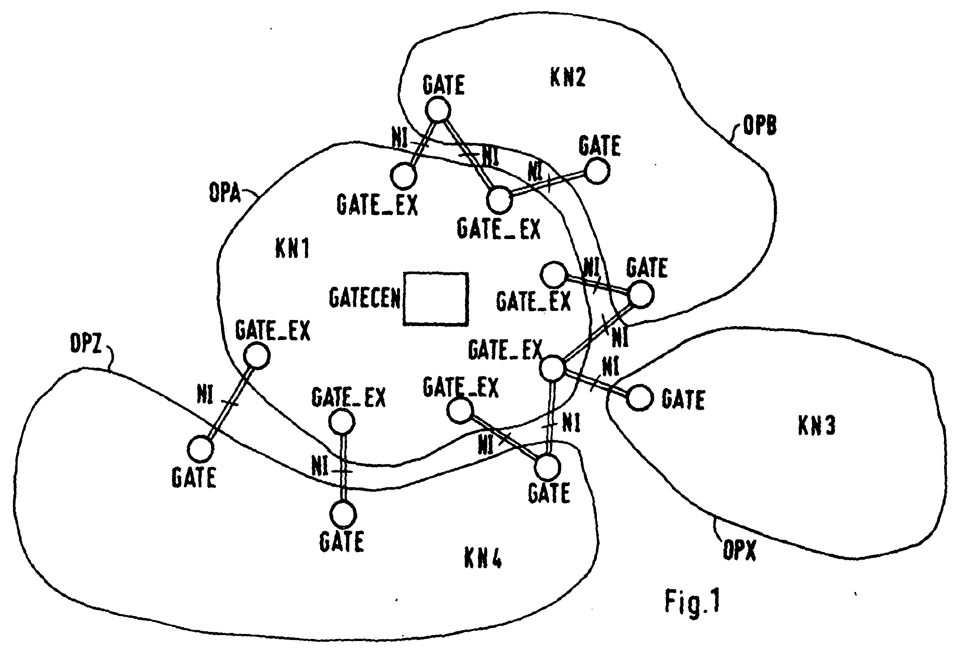

Fig. 1 zeigt vier Kommunikationsnetze KN1 bis KN4, die von vier unterschiedlichen Netzbetreibern OPA, OPB, OPX und OPZ betrieben werden. Das Kommunikationsnetze KN1 weist mehrere Netzübergangs-Vermittlungsstellen GATE_EX auf. Die Kommunikationsnetze KN2 bis KN4 weisen mehrere Vermittlungseinrichtungen GATE auf. Die Netzübergangs-Vermittlungsstellen GATE_EX des Kommunikationsnetzes KN1 sind mit den Yermittlungseinrichungen GATE der Kommunikationsnetze KN2, KN3 und KN4 über Netzübergänge NI verbunden. Das Kommunikationsnetz KN1 weist eine Netzübergangseinrichtung GATECEN auf.

Bei den Kommunikationsnetzen KN1 bis KN4 handelt es sich vorzugsweise um ISDN-Netze (ISDN = Integrated Services Digital Network). Es ist jedoch auch möglich, daß es sich bei den Kommunikationsnetzen KN1 bis KN4 um andersartige Fernsprechnetze oder um unterschiedliche Fernsprechnetze, insbesondere um Fernsprechnetze mit unterschiedlichen Signalisierungsverfahren handelt. Die Kommunikationsnetze KN1 bis KN4 können allgemein beliebige Sprach- oder Datennetze sein, z. B. könnte es sich bei dem Kommunikationsnetz KN3 um das BTX-Netz (BTX = Bildschirmtext) der Deutschen Telecom handeln.

Die Netzübergangs-Vermittlungsstellen GATE_EX stellen übliche Vermittlungsknoten für die jeweiligen Kommunikationsnetze KN1 bis KN4 dar. Im Gegensatz zu den übrigen Vermittlungsknoten der Kommunikationsnetze KN1 bis KN4 (nicht gezeigt) sind die Netzübergangs-Vemittlungsstellen GATE_EX über mindestens einen Nutzkanal mit einer Vermittlungsseinrichung eines anderen Kommunikationsnetzes verbunden. So ist es den Netzübergangs-Vermittlungseinrichtungen GATE_EX möglich, Nutzdaten aus dem jeweiligen der Kommunikationsnetze KN1 bis KN4 in ein anderes Kommunikationsnetz zu vermitteln sowie Nutzdaten von außerhalb des Kommunikationsnetzes zu empfangen und eine erste Vermittlung dieser Nutzdaten für das Kommunikationsnetz KN1 durchzuführen.

Die Vermittlungseinrichtungen GATE stellen Knoten der Kommunikationsnetze KN2 bis KN4 dar, die für das Einleiten oder Ausleiten von Verkehr in bzw. aus dem jeweiligen Kommunikationsnetz verantwortlich sind. In der Regel handelt es sich hierbei um Vermittlungsknoten des jeweiligen Kommunikationsnetzes, die analog zu den Netzübergangsvermittlungstellen 6ATE_EX aufgebaut sind. Es kann sich aber auch um Komponenten wie ROUTER oder BRIDGES handeln.

Die Netzübergänge NI zwischen dem Kommunikationsnetz KN1 und den Kommunikationsnetzen KN2 bis KN4 werden von Nutzkanälen zwischen Netzübergangs-Vermittlungsstellen GATE_EX des Kommunikationsnetzes KN1 und solchen der Kommunikationsnetze KN2 bis KN4 gebildet. Für die Netzübergänge NI werden sowohl auf der Seite des Kommunikationsnetzes KN1 als auch auf der Seite der übrigen Kommunikationsnetze KN2 bis KN4 Netzübergangsfunktionen durchgeführt, die die Kopplung dieser Kommunikationsnetze, die ja unterschiedlichen Netzbetreibern zugeordnet sind, erst ermöglichen. Im Kommunikationsnetz KN1 werden die Netzübergangsfunktionen für sämtliche Verbindungen über die Netzübergänge NI zentralisiert von der Netzübergangseinrichtung GATECEN erbracht.

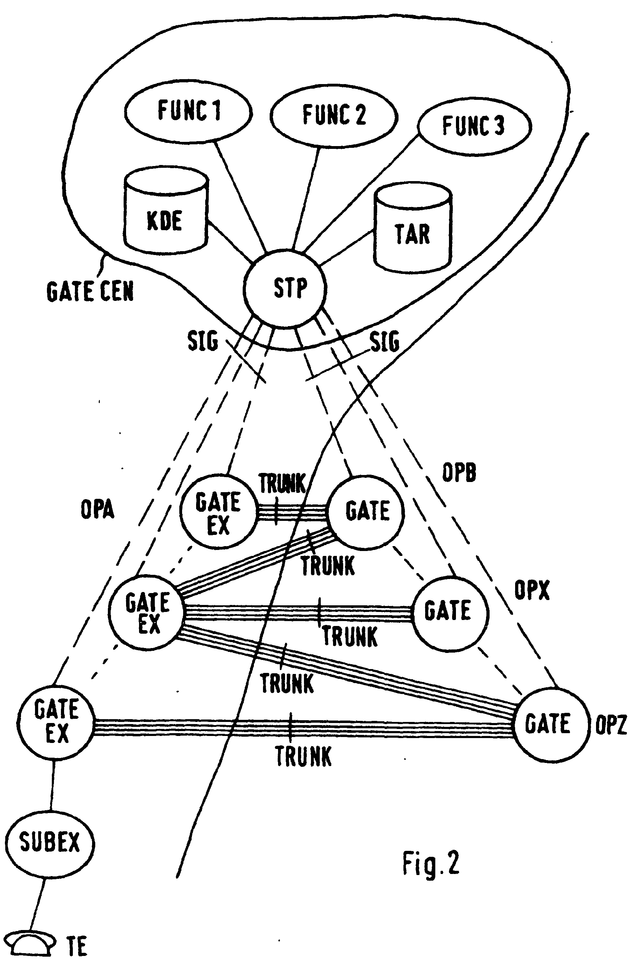

Es ist jedoch auch möglich, daß die Netzübergangsfunktionen lediglich für eine Auswahl von Verbindungen zentralisiert in der Netzübergangseinrichtung erbracht werden, beispielsweise für alle Verbindungen zu einem bestimmten der Kommunikationsnetze KN2 bis KN4.
Im folgenden wird nun die Bereitstellung der Netzübergänge zwischen dem Kommunikationsnetz KN1 und den Kommunikationsnetzen KN2 bis KN4 anhand von Fig. 2 detailliert beschrieben.

Fig. 2 zeigt sechs der Netzübergangs-Vermittlungseinrichtungen GATE_EX, die Netzübergangseinrichtung GATECEN, eine Teilnehmervermittlungsstelle SUBEX und ein Endgerät TE. Drei Übergangs-Vermittlungseinrichtungen GATE_EX sind dem Kommunikationsnetz KN1 und somit dem Netzbetreiber OPA zugeordnet. Jeweils eine Netzübergangs-Vermittlungseinrichtung GATE_EX ist dem Kommunikationsnetz KN2, KN3 bzw. KN4 und somit dem Netzbetreiber OP4, OPX bzw. OPZ zugeordnet. Die Netzübergangs-Vermittlungsstellen GATE_EX des Netzbetreibers OPA sind mit den Vermittlungseinrichtungen GATE der Netzbetreiber OPB, OPX und OPZ über Nutzkanal-Bündel TRUNK verbunden. Die Netzübergangs-Vermittlungsstellen GATE_EX und die Vermittlungseinrichtungen GATE sind mit der Netzübergangseinrichtung GATECEN des Netzbetreibers OPA über Signalisierungskanäle SIG verbunden. Das Endgerät TE ist über die Teilnehmervermittlungsstelle SUBEX mit einer Netzübergangs-Vermittlungsstelle GATE_EX des Netzbetreibers OPA verbunden.

Die Nutzkanal-Bündel TRUNC bestehen jeweils aus einer Vielzahl von PCM-Leitungen, die einen oder mehrere ISDN-Primärmultiplex-Anschlüsse der Netzübergangs-Vermittiungsstellen GATEX mit der jeweiligen Vermittlungseinrichtungen GATE verbindet. Im Nutzkanal-Bündel TRUNK werden hierbei nur die Nutzkanäle für diese Anschlüsse geführt. die Signalisierungskanäle SIG, auf denen die Zeichengabe für die über die Nutzkanäle geführten Verbindungen transportiert wird, sind über Leitungen mit der Netzübergangseinrichtung GATECEN verbunden. Die Signalisierungskanäle werden so von den ihnen zugeordneten Nutzkanal-BÜndel getrennt und zu der zentralen Netzübergangseinrichtung GATECEN geleitet. Die Netzübergangseinrichtung GATECEN führt sodann mittels der auf den Signalisierungskanälen SIG geführten Daten die Netzübergangsfunktionen für sämtliche über die Netzübergangs-Vermittlungsstellen GATE_EX des Kommunikationsnetzes KN1 geführten Verbindungen zu den anderen Kommunikationsnetzen durch.

Die Anzahl der Nutzkanäle in den Nutzkanalbündeln TRUNK kann beliebig von einem Nutzkanal bis zu einer Vielzahl von Nutzkanälen variieren und ist nicht an ein Vielfaches der Anzahl der Nutzkanäle in einem Primärmultiplexanschluß gebunden.

Die Netzübergangseinrichtung GATECEN weist sechs Funktionseinheiten STP, KDE, TAR, FUNC1, FUNC2 und FUNC3 auf.

Die Funktionseinheit STP stellt die Schnittstelle und den Protokoll-Stack zu den an die Netzübergangseinrichtung GATECEN angeschlossenen Signalisierungskanäle SIG bereit. Der Informationsaustausch auf diesen Signalisierungskanälen entspricht hierbei dem Nr. 7 Signalisierungssystem, so daß zur Realisierung der Funktionseinheit STP die bestehenden Nr. 7 STP-Funktionen und Schnittstellen verwendet werden können.

Für die Erbringung der Netzübergangsfunktionen reicht es hierbei aus, die Netzübergangseinrichtung GATECEN rein zeichengabemäBig einzubinden, so daB keine zusätzlichen Verbindungsabschnitte für Nutzkanäle zu der Netzübergangseinrichtung GATECEN notwendig sind.

Die Netzübergangseinrichtung GATECE verfügt hierbei selbst über keinerlei Leitungsvermittlungsfunktionen.

Die Funktionseinheiten KDE bis FUNC3 führen die Netzübergangsfunktionen im engeren Sinne durch. Die Funktionseinheit STP stellt ihnen hierbei die hierfür notwendigen Daten und Eingriffsmöglichkeiten bereit, um die Netzübergangsfunktionen für sämtliche an die Funktionseinheit STP über die Signalisierungskanäle angebundenen Netzübergangs-Vermittlungsstellen GATEEX laufenden Verbindungen zentralisiert zu erbringen.

Die Funktionseinheit KDE erfaßt alle verbindungsrelevanten Daten wie Ursprungsrufnummer, Zielrufnummer, Uhrzeit, Datum als Basis für die Gebührenverrechnung zwischen den Netzbetreibern und speichert sie in einer zentralen Datenbank ab.

Die Funktionseinheit TAR ermöglicht die Bereitstellung einer Gebührenanzeige für Teilnehmer des Kommunikationsnetzes KN1, die einen Verbindungsaufbau zu einem Teilnehmer eines der anderen Kommunikationsnetze KN2 bis KN4 veranlassen. Die Funktionseinheit TAR verfügt hierfür über eine Tarif-Datenbank, die die für die Netzübergänge NI des Kommunikationsnetzes KN1 zu den anderen Kommunikationsnetzen KN2 bis KN4 gültigen Gebührungsinformationen enthält. Mittels dieser Datenbank erzeugt die Funktionseinheit TAR Gebührungsparameter, die sie über den entsprechenden Signalisierungskanal SIG über die Netzübergangs-Vermittlungsstelle GATE_EX zu der Teilnehmervermittlungsstelle des rufenden Teilnehmers sendet. Diese führt sodann die Gebührenanzeige beispielsweise durch Senden von Gebührenimpulsen über die Teilnehmerleitung an das Endgerät des rufenden Teilnehmers durch.

Die Funktionseinheit FUNC1 führt Funktionen durch, die die signalisierungsmäßige Kopplung der Netzübergangs-Vermittlungsstellen GATE_EX mit den Vermittlungseinrichtung GATE der anderen Kommunikationsnetze KN2 bis KN4 ermöglichen. Sie führt hierbei Überwachungs- und Schutzfunktionen für die Kopplung der jeweiligen Signalisierungskanäle zentral für alle diese Signalisierungskanäle durch. Verschiedene Netzbetreiber können auch verschiedene ISUP-Varianten (ISUP = Integrated Service User Part) in Betrieb haben. Die Funktionseinheit FUNC1 führt für diesen Fall zentral eine Konvertierung für diese verschiedenen Zeichengabenvarianten durch.
Weiter überprüft sie die Zeichengabe auf Zulässigkeit hinsichtlich der Vereinbarung zwischen dem Netzbetreiber OPA und den Netzbetreibern OPB bis OPZ. Zum Beispiel überprüft sie, ob die connected line identification (CLE) nach dem Nr. 7 Signalisierungssystem nicht oder zumindestens bei Unterdrückung nicht an das andere Kommunikationsnetz weitergegeben wird.

Die Funktionseinheit FUNC3 führt Überwachungs-, Schutz- und Konvertierungsfunktionen in bezug auf die in den Kommunikationsnetzen KN1 bis KN4 bereitgestellten Telekommunikationsdienste durch. Sie überprüft hierzu die ISDN-Zeichengabe auf ihre Zulässigkeit hinsichtlich der Vereinbarungen zwischen den Netzbetreibern OPA bis OPZ über Telekommunikationsdienste. Ist beispielsweise vereinbart, Dienstzugangsnummern von fremden Netzen kommend zu sperren, so sperrt die Funktionseinheit FUNC3 den Verbindungsaufbau von einem der anderen Kommunikationsnetze KN2 bis KN4 zu einer Dienstzugangsnummer des Kommunikationsnetzes KN1, indem sie über den zugehörigen Signalisierungskanal entsprechende Zeichengabennachrichten auf die Verbindungsanforderung sendet.

Ist der Zugriff auf Telekommunikationsdienste eines anderen Kommunikationsnetzes laut Vereinbarung möglich, so ist es u. U. notwendig, daß die Funktionseinheit FUNC3 eine Konvertierung der Dienstzugangsnummer durchführt, indem sie die Signalisierungsnachrichten von einem der anderen Kommunikationsnetze KN2 bis KN4 entsprechend ändert, bevor sie an die entsprechende Netzübergangs-Vermittlungsstelle weitergeleitet werden.

Die Funktionen der Funktionseinheit FUNC3 können hier nicht nur auf Rufnummernbasis, sondern auch auf der Parameter- und Prozedurebene bereitgestellt werden. Hierdurch ist insbesondere eine Überwachung, Schutz und Konvertierung von ISDN-Diensten möglich.

Es ist auch möglich, daß von der Netzübergangseinrichtung GATECE weitere Netzübergangsfunktionen gemeinsam für mehrere Netzübergangsvermittlungsstellen GATE_EX erbracht werden, die die Kopplung von Kommunikationsnetzen unterschiedlicher Netzbetreiber unterstützen.

Es ist auch möglich, daß die den Nutzkanal-Bündeln TRUNC zugeordneten Signalisierungskanäle nicht über die Netzübergangseinrichtung GATECEN geführt werden. In diesem Fall müßte die Funktionseinheit STP in die einzelnen Netzübergangs-Vermittlungsstellen GATE_EX des Kommunikationsnetzes KN1 integriert werden und die Netzübergangseinrichtung GATECEN würde über Datenverbindungen mit diesen integrierten Funktionseinheiten komnunizieren. Dies hätte jedoch den Nachteil, daß die der Funktionseinheit STP entsprechenden Funktionseinheiten in die Netzübergangs-Vermittlungsstellen GATEEX des Kommunikationsnetzes KN1 integriert werden müßten.

Es ist auch möglich, daß die Verbindung zwischen den Netzübergangs-Vermittlungsstellen GATE_EX mit Vermittlungseinrichtungen GATE der anderen Kommunikationsnetze KN2 bis KN4 über einen oder mehrere Nutzkanäle geführt ist, denen kein Signalisierungskanal zugeordnet ist. Die Signalisierung könnte in diesem Fall beispielsweise innerhalb des Nutzkanals (in-band) erfolgen. Es ist dann ebenfalls notwendig, die der Funktionseinheit STP entsprechenden Funktionen in die Netzübergangs-Vermittlungsstellen GATEEX des Kommunikationsnetzes KN1 zu integrieren und über eine Datenverbindung mit der zentralen Netzübergangseinrichtung GATECEN zu verbinden.

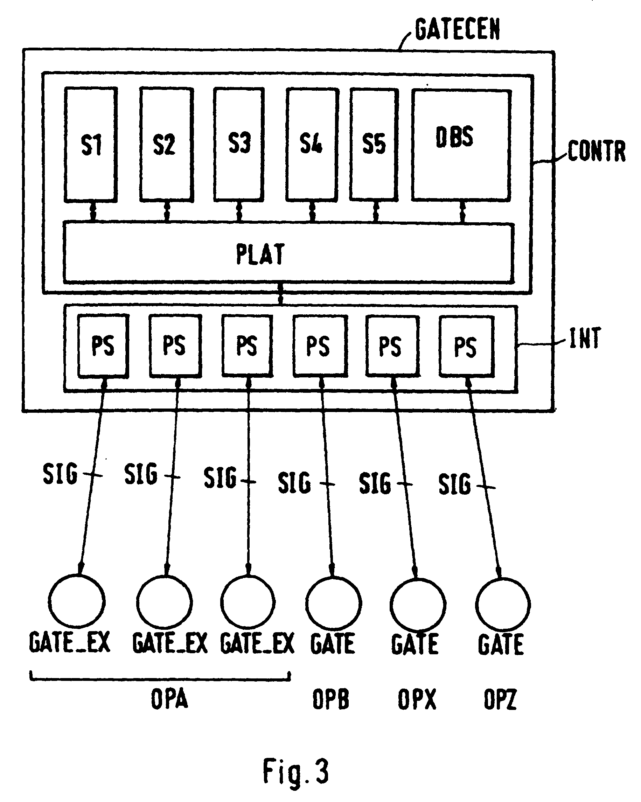

Anhand von Fig. 3 wird nun eine mögliche Realisierung der Netzübergangseinrichtung GATECEN beschrieben.

Fig.3 zeigt die Netzübergangseinrichtung GATECEN, die über Signalisierungskanäle SIG mit den Netzübergangs-Vermittlungsstellen GATEX des Netzbetreibers OPA und den Vermittlungseinrichtungen der Netzbetreiber OPB bis OPZ kommuniziert. Die Netzübergangseinrichtung GATECEN weist eine Schnittstelleneinrichtung INT und eine Steuereinheit CONTR auf.

Die Schnittstelleneinrichtung INT enthält die hardwaremäBigen Funktions-Blöcke, die den Anschluß der Signalisierungskanäle SIG ermöglichen. Sie führt weiter für jeden der Signalisierungskanäle SIG Funktion PS durch, die in der Bearbeitung des Protokoll-Stacks entsprechend des Signalisierungssystems Nr. 7 bestehen.

Die Steuereinheit CONTR besteht aus einer zentralen hard- und softwaremäßigen Plattform PLAT und mehreren auf dieser Plattform ablaufenden und von dieser Plattform gesteuerten Applikationen S1 bis S5 und DWS. Die Applikationen S1 bis S5 führen die Funktionen der Funktionseinheiten KDE, PAR und FUNC1 bis FUNC3 als Server in einer Client-Server Architektur durch. Die Applikation DWS stellt ein Datenbanksystem dar, das die Applikationen S1 bis S5 und zentrale Funktionen der Plattform PLAT bei der Durchführung der jeweiligen Funktion unterstützt. Durch die Verknüpfung der Applikationen S1 bis DWS über die zentrale Plattform PLAT ist es hierbei möglich, die Netzübergangsfunktionen gemeinsam für eine Vielzahl von Netzübergangs-Vermittlungsstellen auf einfache Weise zentralisiert zu erbringen.

## Patentansprüche

1. Verfahren zum Betreiben eines Kommunikationsnetzes (KN1) eines Netzbetreibers (OPA), das mit einem oder mit mehreren weiteren Kommunikationsnetzen (KN2 bis KN4) eines oder mehrerer anderer Netzbetreiber (OPB bis OPZ) jeweils über einen oder über mehrere Netzübergänge (NI) verkoppelt ist, wobei bei dem Verfahren für jeden Netzübergang (NI) eine Netzübergangs-Vermittlungsstelle (GATE EX) Nutzdaten über mindestens einen Nutzkanal mit einer Vermittlungseinrichtung (GATE) des jeweiligen weiteren Kommunikationsnetzes (KN2 bis KN4) austauscht und für alle Verbindungen über den oder jeden Nutzkanal Netzübergangsfunktionen (STP, KDE, TAR, FUNC1 bis FUNC3) durchgeführt werden, die die Kopplung des Kommunikationsnetzes über den jeweiligen Netzübergang (NI) mit dem jeweiligen weiteren Kommunikationsnetz (KN2 bis KN4) des jeweiligen anderen Netzbetreibers (OPB bis OPZ) unterstützen, **dadurch gekennzeichnet , daß** die Netzübergangsfunktionen (STP, KDE, TAR, FUNC1 bis FUNC3) für sämtliche Verbindungen von zwei oder mehr räumlich verteilten Netzübergangs-Vermittlungsstellen (GAT_EX) zu mindestens einem der weiteren Kommunikationsnetze (KN2 bis KN3) von einer gemeinsamen Netzübergangseinrichtung (GATECEN) erbracht werden.

2. Verfahren nach Anspruch 1, **dadurch gekennzeichnet, daß** für jeden Netzübergang (NI) der oder alle Nutzkanäle ein Nutzkanal-Bündel (TRUNK) bilden, dem mindestens ein Signalisierungskanal (SIG) zwischen der jeweiligen Netzübergangs-Vermittlungsstelle (GATE_EX) und dem jeweiligen weiteren Kommunikationsnetz (KN1 bis KN3) zugeordnet ist.

3. Verfahren nach Anspruch 2, **dadurch gekennzeichnet, daß** die Zeichengabe über den oder jeden Signalisierungskanal (SIG) gemäß dem Zeichengabesystem Nr. 7 erfolgt.

4. Verfahren nach Anspruch 2 oder 3, **dadurch gekennzeichnet, daß** der oder jeder Signalisierungskanal (SIG) zwischen den räumlich verteilten Netzübergangs-Vermittlungsstellen (GATE_EX) und dem oder jedem weiteren Kommunikationsnetz (KN2 bis KN3) über die zentrale Netzübergangseinrichtung (GATECEN) geführt wird und die Netzübergangsfunktionen (STP, KDE, TAR, FUNC1 bis FUNC3) für die jeweiligen.Verbindungen durch Verarbeitung von über diese Signalisierungskanäle (SIG) übertragene Daten durchgeführt werden.

5. Verfahren nach einem der Ansprüche 1 bis 4, **dadurch gekennzeichnet, daß** die Netzübergangseinrichtung (GATECEN) die für die Vergebührung mit anderen Netzbetreibern (OPB bis OPZ) notwendigen Kommunikationsdaten zentralisiert erfaßt.

6. Verfahren nach einem der Ansprüche 1 bis 5, **dadurch gekennzeichnet, daß** die Netzübergangseinrichtung (GATECEN) die Anpassung und Überwachung der Zeichengabe zwischen Kommunikationsnetzen (KN1 bis KN4) unterschiedlicher Netzbetreiber (OPA bis OPZ) zentralisiert erbringt.

7. Verfahren nach einem der Ansprüche 1 bis 6, **dadurch gekennzeichnet, daß** die Netzübergangseinrichtung (NI) den Zugang zu Telekommunikationsdiensten des Kommunikationsnetzes (KN1) von einem oder von mehreren der weiteren Kommunikationsnetze (KN2 bis KN3) aus zentralisiert steuert und anpaßt.

8. Verfahren nach einem der Ansprüche 1 bis 7, **dadurch gekennzeichnet, daß** die zentrale Netzübergangseinrichtung (GATECEN) die Netzübergangsfunktionen (STP, KOE, TAR, FUNC1 bis FUNC3) für sämtliche Verbindungen zu den weiteren Kommunikationsnetzen (KN2 bis KN3) zentralisiert erbringt.

9. Verfahren nach einem der Ansprüche 1 bis 8, **dadurch gekennzeichnet, daß** die zentrale Netzübergangseinrichtung die Netzübergangsfunktionen für sämtliche Verbindungen zu mindestens einem der weiteren Kommunikationsnetz (KN2 bis KN4) sowohl für den Netzbetreiber als auch für den oder jeden anderen Netzbetreiber zentralisiert erbringt.

10. Verfahren nach Anspruch 9, **dadurch gekennzeichnet, daß** die zentrale Netzübergangseinrichtung von einem Dritten verwaltet wird.

11. Kommunikationsnetz (KN1) eines Netzbetreibers (OPA) mit mehreren Netzübergängen (NI) zur Verkopplung des Kommunikationsnetzes (KN1) mit einem oder mit mehreren Kommunikationsnetzen (KN2 bis KN4) anderer Netzbetreiber (OPB bis OPZ), wobei das Kommunikationsnetz (KN1) mit mehreren Netzübergangs-Vermittlungsstellen (GATE_EX) versehen ist, die so ausgestaltet sind, daß sie für einen oder für mehrere Netzübergänge (N1) jeweils Nutzdaten über mindestens einen Nutzkanal mit einer Vermittlungseinrichtung (GATE) des oder eines der weiteren Kommunikationsnetze (KN2 bis KN4) austauschen, und mit Mitteln zum Durchführen von Netzübergangsfunktionen (STP, KDE, TAR, FUNC1 bis FUNC3) für alle Verbindungen über die Nutzkanäle versehen ist, die die Kopplung des Kommunikationsnetzes (KN1) über den jeweiligen Netzübergang (NI) mit dem jeweiligen weiteren Kommunikationsnetz (KN2 bis KN4) des jeweiligen anderen Netzbetreibers (OPB bis OPZ) unterstützen,
**dadurch gekennzeichnet, daß** zwei oder mehr räumlich verteilte Netzübergangs-Vermittlungsstellen (GATE_EX) mit einer Netzübergangseinrichtung (GATECEN) verbunden sind, die so ausgestaltet ist, daß sie die Mittel zum Durchführen der Netzübergangsfunktionen (STP, KDE, TAR, FUNC1 bis FUNC3) für Verbindungen von diesen zwei oder mehr Netzübergangs-Vermittlungssteilen (GATE_EX) zu mindestens einem der weiteren Kommunikationsnetze (KN2 bis KN4) gemeinsam bereitstellt.

12. Netzübergangseinrichtung (GATECEN) mit einer Steuereinheit (CONTR), die für Verbindungen über mindestens einen einem Netzübergang (NI) zugeordneten Nutzkanal Netzübergangsfunktionen (STP, KDE, TAR, FUNC1 bis FUNC3) durchführt, die die Kopplung zweier Kommunikationsnetze (KN1; KN2 bis KN4) unterschiedlicher Netzbetreiber (OPA; OPB bis OPZ) über den Netzübergang (NI) unterstützen,
**dadurch gekennzeichnet, daß** die Netzübergangseinrichtung (GATECEN) mit einer Schnittstelleneinrichtung (INT) zum Verbinden der Netzübergangseinrichtung (GATECEN) mit zwei oder mehr räumlich verteilten Netzübergangs-Vermittlungsstellen (GATE_EX) versehen ist, und daß die Steuereinheit (CONTR) so ausgestaltet ist, daß sie gemeinsam Netzübergangsfunktionen (STP, KDE, TAR, FUNC1 bis FUNC3) für Verbindungen von den zwei oder mehr räumlich verteilten Netzübergangs-Vermittlungsstellen (GATE_EX) zu einem oder zu mehreren weiteren Kommunikationsnetzen (KN2 bis KN4) erbringt.

## Claims

1. Method for operating a communication network (KN1) of a network operator (OPA), this network being linked to one or more further communication networks (KN2 to KN4) of one or more other network operators (OPB to OPZ) via one or more gateways (NI) in each case, in which method for each gateway (NI) an internetwork switching centre (GATE EX) exchanges user data over at least one user information channel with a switching device (GATE) of the respective further communication network (KN2 to KN4) and for all connections over the or each user information channel internetwork functions (STP, KDE, TAR, FUNC1 to FUNC3) are executed, which support the coupling of the communication network via the respective gateway (NI) with the respective further communication network (KN2 to KN4) of the respective other network operator (OPB to OPZ), **characterized in that** the internetwork functions (STP, KDE, TAR, FUNC1 to FUNC3) for all connections of two or more spatially distributed internetwork switching centres (GAT_EX) to at least one of the further communication networks (KN2 to KN3) are provided by a common network gateway device (GATECEN).

2. Method according to Claim 1, **characterized in that** for each gateway (NI) the or all user information channels form a CCS7 trunk group (TRUNK), to which at least one signalling channel (SIG) between the respective internetwork switching centre (GATE_EX) and the respective further communication network (KN1 to KN3) is assigned.

3. Method according to Claim 2, **characterized in that** the signalling over the or each signalling channel (SIG) is according to the signalling system no. 7.

4. Method according to Claim 2 or 3, **characterized in that** the or each signalling channel (SIG) between the spatially distributed internetwork switching centres (GATE_EX) and the or each further communication network (KN2 to KN3) is routed via the central network gateway device (GATECEN) and the internetwork functions (STP, KDE, TAR, FUNC1 to FUNC3) for the respective connections are performed by processing of data transmitted over these signalling channels (SIG).

5. Method according to one of Claims 1 to 4, **characterized in that** the network gateway device (GATECEN) centrally records the communication data necessary for the charging with other network operators (OPB to OPZ).

6. Method according to one of Claims 1 to 5, **characterized in that** the network gateway device (GATECEN) centrally handles the adaptation and monitoring of the signalling between communication networks (KN1 to KN4) of different network operators (OPA to OPZ).

7. Method according to one of Claims 1 to 6, **characterized in that** the network gateway device (NI) centrally controls and adapts the access to telecommunication services of the telecommunication network (KN1) from one or more of the further communication networks (KN2 to KN3).

8. Method according to one of Claims 1 to 7, **characterized in that** the central network gateway device (GATECEN) centrally provides the internetwork functions (STP, KDE, TAR, FUNC1 to FUNC3) for all connections to the further communication networks (KN2 to KN3).

9. Method according to one of Claims 1 to 8, **characterized in that** the central network gateway device centrally provides the internetwork functions for all connections to at least one of the further communication network (KN2 to KN4) both for the network operator and for the or each other network operator.

10. Method according to Claim 9, **characterized in that** the central network gateway device is managed by a third party.

11. Communication network (KN1) of a network operator (OPA) with several gateways (NI) for coupling the communication network (KN1) with one or more communication networks (KN2 to KN4) of other network operators (OPB to OPZ), the communication network (KN1) being equipped with several internetwork switching centres (GATE_EX), which are developed in such a way that for one or more gateways (NI) they exchange user data in each case over at least one user information channel with a switching device (GATE) of the or one of the further communication networks (KN2 to KN4), and being equipped with means for executing internetwork functions (STP, KDE, TAR, FUNC1 to FUNC3) for all connections over the user information channels, which support the coupling of the communication network (KN1) via the respective gateway (NI) with the respective further communication network (KN2 to KN4) of the respective other network operator (OPB to OPZ), **characterized in that** two or more spatially distributed internetwork switching centres (GATE_EX) are connected to a network gateway device (GATECEN), which is developed such that it jointly provides the means of executing the internetwork functions (STP, KDE, TAR, FUNC1 to FUNC3) for connections of these two or more internetwork switching centres (GATE_EX) to at least one of the further communication networks (KN2 to KN4).

12. Network gateway device (GATECEN) with a control unit (CONTR), which for connections over at least one user information channel assigned to a gateway (NI) executes internetwork functions (STP, KDE, TAR, FUNC1 to FUNC3), which support the coupling of two communication networks (KN1; KN2 to KN4) of different network operators (OPA; OPB to OPZ) via the gateway (NI), **characterized in that** the network gateway device (GATECEN) is equipped with an interface device (INT) for connecting the network gateway device (GATECEN) with two or more spatially distributed internetwork switching centres (GATE_EX), and that the control unit (CONTR) is developed such that it jointly provides internetwork functions (STP, KDE, TAR, FUNC1 to FUNC3) for connections of the two or more spatially distributed internetwork switching centres (GATE_EX) to one or more further communication networks (KN2 to KN4).

## Revendications

1. Procédé pour l'exploitation d'un réseau de communication (KN1) d'un exploitant de réseau (OPA), qui est couplé avec un ou plusieurs autres réseaux de communication (KN2 à KN4) d'un ou de plusieurs autres exploitants de réseau (OPB à OPZ) respectivement au moyen d'une ou de plusieurs passerelles (NI), un commutateur de passerelle (GATE EX) échangeant avec le procédé pour chaque passerelle (NI) des données utiles au moyen d'au moins un canal utile avec un commutateur (GATE) de l'autre réseau de communication (KN2 à KN4) concerné et des fonctions de passerelle (STP, KDE, TAR, FUNC1 à FUNC3) sont effectuées pour toutes les liaisons par le ou chaque canal utile, lesquelles fonctions soutiennent le couplage du réseau de communication via la passerelle (NI) concernée avec l'autre réseau de communication (KN2 à KN4) respectif de l'autre exploitant de réseau (OPB à OPZ) concerné, **caractérisé en ce que** les fonctions de passerelle (STP, KDE, TAR, FUNC1 à FUNC3) sont fournies par un système passerelle (GATECEN) commun pour toutes les liaisons allant de deux ou plus de deux commutateurs de passerelle (GAT_EX) répartis dans l'espace à au moins l'un des autres réseaux de communication (KN2 à KN3).

2. Procédé selon la revendication 1, **caractérisé en ce que**, pour chaque passerelle (NI), le ou tous les canaux utiles forment un faisceau de canal utile (TRUNK), auquel il est attribué au moins un canal de signalisation (SIG) entre le commutateur de passerelle (GATE_EX) respectif et l'autre réseau de communication (KN1 à KN3) respectif.

3. Procédé selon la revendication 2, **caractérisé en ce que** la signalisation s'effectue au moyen du ou de chaque canal de signalisation (SIG) selon le système de signalisation n° 7.

4. Procédé selon la revendication 2 ou 3, **caractérisé en ce que** le ou chaque canal de signalisation (SIG) est guidé entre les commutateurs de passerelle (GATE_EX) répartis dans l'espace et le ou chaque autre réseau de communication (KN2 à KN3) par le système passerelle (GATECEN) central et les fonctions de passerelle (STP, KDE, TAR, FUNC1 à FUNC3) pour les liaisons concernées sont effectuées par le traitement de données transmises par ces canaux de signalisation (SIG).

5. Procédé selon l'une quelconque des revendications 1 à 4, **caractérisé en ce que** le système passerelle (GATECEN) enregistre de façon centralisée les données de communication nécessaires pour la taxation avec d'autres exploitants de réseaux (OPB à OPZ).

6. Procédé selon l'une quelconque des revendications 1 à 5, **caractérisé en ce que** le système passerelle (GATECEN) effectue de façon centralisée l'adaptation et le contrôle de la signalisation entre des réseaux de communication (KN1 à KN4) de différents exploitants de réseaux (OPA à OPZ).

7. Procédé selon l'une quelconque des revendications 1 à 6, **caractérisé en ce que** le système passerelle (NI) commande et adapte de façon centralisée l'accès à des services de télécommunication du réseau de communication (KN1) à partir d'un ou de plusieurs des autres réseaux de communication (KN2 à KN3).

8. Procédé selon l'une quelconque des revendications 1 à 7, **caractérisé en ce que** le système passerelle (GATECEN) central fournit de façon centralisée les fonctions de passerelle (STP, KDE, TAR, FUNC1 à FUNC3) pour l'ensemble des liaisons avec les autres réseaux de communication (KN2 à KN3).

9. Procédé selon l'une quelconque des revendications 1 à 8, **caractérisé en ce que** le système passerelle central fournit les fonctions de passerelle pour l'ensemble des liaisons avec au moins l'un des autres réseaux de communication (KN2 à KN4) aussi bien pour l'exploitant de réseau que pour le ou chaque autre exploitant de réseau.

10. Procédé selon la revendication 9, **caractérisé en ce que** le système passerelle central est géré par un tiers.

11. Réseau de communication (KN1) d'un exploitant de réseau (OPA) avec plusieurs passerelles (NT) pour le couplage du réseau de communication (KN1) avec un ou plusieurs réseaux de communication (KN2 à KN4) d'autres exploitants de réseaux (OPB à OPZ), le réseau de communication (KN1) étant doté de plusieurs commutateurs de passerelle (GATE_EX), qui sont conçus de telle sorte qu'ils échangent pour une ou plusieurs passerelles (NI) respectivement des données utiles au moyen d'au moins un canal utile avec un commutateur (GATE) du ou de l'un des autres réseaux de communication (KN2 à KN4), et étant doté de moyens pour l'exécution de fonctions de passerelle (STP, KDE, TAR, FUNC1 à FUNC3) pour toutes les liaisons passant par les canaux utiles, qui soutiennent le couplage du réseau de communication (KN1) via la passerelle (NI) respective avec l'autre réseau de communication concernés (KN2 à KN4) de l'autre exploitant de réseau concernés (OPB à OPZ),
**caractérisé en ce que** deux ou plus de deux commutateurs de passerelle (GATE_EX) répartis dans l'espace sont reliés à un système de passerelle (GATECEN), qui est conçu de telle sorte qu'il met à disposition conjointement les moyens pour l'exécution des fonctions de passerelle (STP, KDE, TAR, FUNC1 à FUNC3) pour les liaisons allant de ces deux ou plus de deux commutateurs de passerelle (GATE_EX) à au moins l'un des autres réseaux de communication (KN2 à KN4).

12. Système passerelle (GATECEN) avec unc unité de commande (CONTR), qui effectue pour des liaisons au moyen d'au moins un canal utile attribué à une passerelle (NI) des fonctions de passerelle (STP, KDE, TAR, FUNC1 à FUNC3) qui contiennent le couplage des deux réseaux de communication (KN1 ; KN2 à KN4) de différents exploitants de réseaux (OPA ; OPB à OPZ) via la passerelle (NI),
**caractérisé en ce que** le système passerelle (GATECEN) est doté d'un dispositif d'interface (INT) pour la liaison du système passerelle (GATECEN) avec deux ou plus de deux commutateurs de passerelle (GATB_EX) répartis dans l'espace, et **en ce que** l'unité de commande (CONTR) est conçue de telle sorte qu'elle fournit conjointement des fonctions de passerelle (STP, KDE, TAR, FUNC1 à FUNC3) pour des liaisons allant de deux ou plus de deux commutateurs de passerelle (GATE_EX) répartis dans l'espace à un ou plusieurs autres réseaux de communication (KN2 à KN4).
